# EUROPEAN PATENT SPECIFICATION

(11) **EP 2 229 263 B1**
(45) Date of publication and mention of the grant of the patent: **20.02.2013**
(21) Application number: 08869921.0
(22) Date of filing: 16.12.2008
(51) Int. Cl.: B27K 5/04, B27K 3/02

(54) **METHOD FOR PRESSURE IMPREGNATING WOOD OR WOOD PRODUCTS WITH WOOD PRESERVATIVE CONTAINING WATER GLASS AND IMPREGNATED WOOD OR WOOD PRODUCT**
VERFAHREN ZUR DRUCKIMPRÄGNIERUNG VON HOLZ ODER HOLZPRODUKTEN MIT EINEM WASSER- UND GLASHALTIGEN HOLZSCHUTZMITTEL SOWIE IMPRÄGNIERTES HOLZ ODER HOLZPRODUKT
PROCÉDÉ POUR L'IMPRÉGNATION SOUS PRESSION DE BOIS OU DE PRODUITS DU BOIS AVEC UN PRODUIT DE CONSERVATION DU BOIS CONTENANT DU SILICATE DE SODIUM ET BOIS OU PRODUIT DU BOIS IMPRÉGNÉ

(30) Priority: 09.01.2008 FI 20080017
(43) Date of publication of application: 22.09.2010
(73) Proprietor: Stora Enso Wood Products Oy Ltd, 00501 Helsinki (FI)
(72) Inventor: BOREN, Hannu, FI-75970 Kohtavaara (FI)
(74) Representative: Pitkänen, Hannu Alpo Antero
(86) International application number: PCT/FI2008/050743
(87) International publication number: WO 2009/087262

(56) References cited:
- EP-A1- 1 681 145
- WO-A1-99/15321
- SE-B- 459 957
- US-A1- 2003 104 135
- US-A1- 2003 104 135
- US-A1- 2004 031 416
- US-A1- 2004 105 938
- US-A1- 2005 053 778

## Description

The invention relates to a method for pressure impregnating wood or wood products according to the preamble of claim 1 and to wood or a wood product according to the preamble of claim 6.

Sodium silicates (water glass) consist of silicon dioxide and sodium oxide. Their weight and mole ratio can be varied according to requirements depending on the application. They are incombustible, odourless, non-hazardous to the environment and have no unhealthy qualities except for a high pH value. The pH of aqueous solutions of sodium silicates depend on the mole ratio of silicon dioxide and sodium oxide in the solution and the concentration of the solution. The pH rises as the concentration increases and, on the other hand, as the mole ratio decreases. The pH of sodium silicate solution of 3.3 mole ratio is about 11.2 and the one of water glass of 2.5 mole ratio is again 12.6.

Other properties affecting the behaviour of water glass are solids content, density and viscosity. The viscosity is dependent on the mole ratio, solids content and temperature. The solids content of the solution can be increased by decreasing the mole ratio. The solids contents of solutions of 3.3 and 2.5 mole ratio are 36% and 43%, respectively. Water glass solutions are stable in alkaline conditions. The polymerisation of water glass starts as pH decreases to ten.

The use of water glass as a wood preservative has been studied widely. After impregnation, water glass will harden in the pores of wood as a result of the evaporation of water and will polymerise when reacting with acid carboxyl groups in the wood cells. Polymerisation can be enhanced with thermal treatment, metallic salts and various acids. The inherent water-solubility of water glass decreases as the mole ratio increases. Also, the solubility of lignin in the wood decreases as the sodium-silicate mole ratio increases and pH decreases.

It has been found that using water glass in the impregnation of wood provides various advantages. As incombustible material, water glass protects cellulose fibres mechanically and prevents the combustion reaction with oxygen. Furthermore, water glass has been found to increase wood hardness, decrease moisture absorption and improve dimension stability. Water glass also protects wood from micro-organisms and minimises the risk of moulding in outdoor use. For long, water glass has been known as a wood preservative, but a great problem has been related to its use: full or sufficiently deep penetration of water glass in wood particularly with acidic wood species (conifers) has not been obtained with concentrated water glass solutions of 3.3 mole ratio. For this reason, inter alia, the hardness, wear-resistance, rot-resistance, fire-endurance, and weather-proofness properties of water-glass impregnated wood have remained too weak. When using water glass of low mole ratio, the full penetration in the wood is obtained more easily. The low mole ratio water glass is more soluble (washes away from wood) and weakens the properties of wood due to a higher pH value.

In US 2003/104135 has been presented a method and a composition for treating wood, where wood is treated by providing a treatment solution which includes an alkali silicate and a sealant composition, pressure treating the wood with the treatment solution and applying energy to the treated wood. In WO 99/15321 has been presented a process for improving the impregnability of refractory wood species by pre-treatment with fungi of genera Trichoderma o Gliocladium or with weakly wood-degraging fungi. In EP 1681145 has been presented a procedure and a composition for the improvement of the uptake and distribution of soaking compositions in woods. The procedure comprises contacting the wood with the fungus Physisporinus vitreus.

The object of the invention is to provide a method for pressure impregnating wood or wood products, by means of which above problems related to recently known wood impregnation methods based on the use of water glass will be eliminated. Particularly, an object of the invention is to introduce a method with which wood or wood products can be pressure impregnated with water glass so that the water glass is able to penetrate until the heartwood also with acidic wood species and when using concentrated water glass solutions of 3.3 mole ratio. Furthermore, an object of the invention is to introduce wood or a wood product impregnated with water glass in this way.

The object of the invention is provided with a method, which is characterised by what is presented in the characterising section of claim 1 and with wood or a wood product, which is characterised by what is presented in the characterising section of claim 6.

In the method according to the invention, wood or a wood product is blue-stain treated before starting the impregnating stage so that the wood or the wood product being impregnated will become blue stained at least partially and, after or before impregnation, the wood or the wood product will be high temperature dried and/or thermally treated so that the blue stain formed in the blue-stain treatment will not mainly be observable even after machining the wood. Impregnation tests performed with water glass have shown that the penetration of water glass in wood improves substantially if the wood being treated is blue stained. When pressure impregnating blue stained wood with water glass, it is also possible to make the concentrated water glass of 3.3 mole ratio to penetrate the wood until the heartwood. Earlier, blue stained wood has been impregnated with CCA, among others, but a stronger blue stain has usually remained visible in the impregnated wood. Using blue stained wood has been avoided for reasons of appearance particularly in interior spaces, but also in external cladding etc., even though blue stain will not weaken the strength properties of wood. With thermal treatment or high temperature drying performed after or before impregnation, the appearance defects caused by blue stain will be eliminated, because the colour of the blue stained part of wood will turn brown in the treatment. In other words, with the method according to the invention, it is possible to pressure impregnate wood or wood products with concentrated mole ratio water glass so that sufficient penetration is obtained without appearance defects following the blue-stain treatment performed for improving the penetration.

The wood or the wood product according to the invention is blue-stain treated before starting the impregnating stage so that the wood or the wood product is blue stained at least partially and, after or before impregnation, the wood or the wood product is high temperature dried and/or thermally treated so that the blue stain formed in the blue-stain treatment will not mainly be observable even after machining the wood. Of its rot resistance, such wood or wood product impregnated with water glass is equivalent to wood impregnated with recent pressure preservatives (i.e. recent Ar-Cr free substitutes of CCA) but totally safe for humans and the environment. Furthermore, an advantage of such impregnated wood or wood product is that, due to the incombustibility of water glass, wood impregnated in this way becomes almost incombustible and thus such wood or wood product is better suited to be used in e.g. fire-classified targets of buildings than wood traditionally pressure impregnated or non-impregnated.

In an advantageous embodiment of the invention, the wood product is manufactured by laminating and/or by joining two or more pieces of wood together so that on the outer surface of the wood product there is a wood layer as thick as possible impregnated with water glass and a possible non-impregnated wood layer, such as heartwood, is left in the inner part of the wood or wood product for securing required fire-endurance class and time and load-bearing capacity.

In an advantageous additional embodiment of the invention, the wood product is manufactured of such timber on the sap face of which there is no heartwood and on the heart face of which there is no heartwood or it only exists in the middle/middle part of the heart face.

The invention will now be described in more details by means of a few embodiments as examples.

When manufacturing wood impregnated with water glass according to the invention, wood or wood products are blue-stain treated before pressure impregnation. The blue-stain treatment can be done e.g. by keeping/storing wood or wood products being treated outside, by keeping wood or wood products in a moisturised drying chamber or by treating wood or wood products with bacteria/microbes and keeping the wood or wood products in a special blue-stain treatment space especially made for this purpose in which air moisture and temperature best suitable for blue staining are arranged.

High temperature drying is done in the temperature of about 105....160°C and thermal treatment in the temperature of over 160°C, whereby the colour of the wood products changes to beautiful brown and blue stain is no longer easily observable in the wood even after possible machining, such as planing. The wood or wood product is treated brown throughout by means of hot wax, oil, pressurised air, steam, and/or vacuum. It is possible to perform the high temperature drying and/or thermal treatment in an impregnating cylinder or other equivalent space.

### Example 1.

Pine top log was sawn into 32*100 mm surface board, which was put in a strip package. The strip package was left unprotected outside on top of footing pieces, whereby conditions were favourable for the blue staining of timber. When the sawn timber was partially blue stained, it was dried in a normal chamber drying plant to the moisture of 25%. After this, the sawn timber was impregnated by the normal Bethell process with 3.3 mole-ratio water glass with the solution concentration of 15%. After the impregnation, the sawn timber was high temperature dried in the temperature of 130°C by means of steam in an impregnating cylinder for so long that the colour of the wood changed to brown and blue stain was no longer easily observable in the wood even after planing.

### Example 2.

Pine top log was sawn into 32*100 mm surface board, which was put in a strip package. The strip package was left unprotected outside on top of footing pieces, whereby conditions were favourable for the blue staining of timber. After the sawn timber was partially blue stained, it was high temperature dried in the temperature of 130°C by means of steam in an impregnating cylinder for so long that the colour of the wood changed to brown and blue stain was no longer easily observable in the wood. After this, the sawn timber was impregnated by the normal Bethell process with 3.3 mole-ratio water glass with the solution concentration of 15%. After the impregnation, the sawn timber was dried in the temperature of 80°C normally in a chamber drying plant, after which it was planed into 28*95 mm.

### Example 3.

Pine top log was sawn into 32*100 mm surface board, which was put in a strip package. The strip package was left unprotected outside on top of footing pieces, whereby conditions were favourable for the blue staining of timber. When the sawn timber was partially blue stained, it was dried in an impregnating cylinder by means of hot pressurised air, steam and vacuum in the temperature of 130°C to the moisture of about 20%. After this, the sawn timber was impregnated by the normal Bethell process with 3.3 mole-ratio water glass with the solution concentration of 15%. After the impregnation, the sawn timber was high temperature dried in the temperature of 130°C by means of hot pressurised air, steam and vacuum in the impregnating cylinder for so long that the colour of the wood changed to brown and blue stain was no longer easily observable in the wood even after planing.

### Example 4.

Pine top log was sawn into 32*100 mm surface board, which was put in a strip package. The strip package was left unprotected outside on top of footing pieces, whereby conditions were favourable for the blue staining of timber. When the sawn timber was partially blue stained, it was dried in a normal chamber drying plant to the moisture of 25%. After this, the sawn timber was impregnated by the normal Bethell process with 3.3 mole-ratio water glass with the solution concentration of 20%. After the impregnation, the sawn timber was high temperature dried in the temperature of 105°C to the moisture of 18%. After this, the sawn timber was planed into 28*95 mm and was graded by strength. Blanks of the lowest strength grades were then manufactured into various glue wood blanks, e.g. 56*95 mm, in which the heart faces are against each other. After this, the glued blank will be extremely resistant to fire and it can be used in manufacturing roof trusses, supporting partition walls etc., among others. The blanks of higher strength grades were used in manufacturing roof trusses as such. These blanks were made into roof truss pairs in which nail boards etc. remained in the middle of the roof truss pair safe from fire. Also the heart face of the sawn timber was directed so that the heart face always remained in the middle of the roof truss pair.

It is thus possible to manufacture fire-proof roof trusses or other such building products e.g. by gluing heart faces against each other or by using nail boards only on the side of the heart face, whereby the nail boards remain in the middle of the roof truss (or roof truss pair) safe from fire.

In an embodiment of the method according to the invention, it is possible to use pigmented water glass in the impregnation. The pH value of pigment being mixed with water glass has to be as close as possible to the pH value of water glass. An advantage of pigmenting is that the colour of wood impregnated with it can be changed in a way equivalent to the recent impregnation methods.

## Claims

1. A method for pressure impregnating wood or wood products with a wood preservative containing water glass, in which method wood is pressure impregnated with the wood preservative containing water glass, **characterised in that** wood or a wood product is blue-stain treated before starting the impregnating stage so that the wood or wood product being impregnated becomes blue stained at least partially and that, after or before the impregnation, the wood or the wood product is high temperature dried and/or thermally treated so that blue stain formed in the blue-stain treatment will not mainly be visible even after machining the wood.

2. A method according to claim 1, **characterised in that** the blue-stain treatment is performed by storing wood outside.

3. A method according to claim 1, **characterised in that** the blue-stain treatment is performed by treating wood in a drying chamber so that the wood becomes blue stained before starting the drying.

4. A method according to any one of claims 1-3, **characterised in that** for the pressure impregnating is used pigmented water glass for changing the colour of the wood or the wood product.

5. A method according to any one of claims 1-4, **characterised in that** the wood or the wood product is treated brown throughout by means of hot wax, oil, pressurised air, steam, and/or vacuum.

6. Pressure impregnated wood or wood product which is pressure impregnated with a wood preservative containing water glass, **characterised in that** the wood or the wood product is blue-stain treated before starting the impregnating stage so that the wood or the wood product is blue stained at least partially and, after or before impregnation, the wood or the wood product is high temperature dried and/or thermally treated so that the blue stain formed in the blue-stain treatment will not mainly be observable even after machining the wood.

7. Wood or a wood product according to claim 6,**characterised in that** for the pressure impregnating is used pigmented water glass.

## Patentansprüche

1. Verfahren zum Imprägnieren von Holz oder Holzprodukten unter Druck mit einem Wasserglas enthaltenden Holzschutzmittel, wobei bei diesem Verfahren Holz unter Druck mit dem Wasserglas enthaltenden Holzschutzmittel imprägniert wird, **dadurch gekennzeichnet, dass** Holz oder ein Holzprodukt vor dem Beginn des Stadiums der Imprägnierung einer zu Bläue führenden Behandlung unterzogen wird, so dass das zu imprägnierende Holz oder Holzprodukt wenigstens teilweise von Bläue befallen wird, und dass nach oder vor der Imprägnierung das Holz oder das Holzprodukt hochtemperaturgetrocknet und/oder wärmebehandelt wird, so dass Bläue, die bei der zu Bläue führenden Behandlung gebildet wird, sogar nach maschineller Bearbeitung des Holzes kaum sichtbar ist.

2. Verfahren nach Anspruch 1, **dadurch gekennzeichnet, dass** die zu Bläue führende Behandlung durchgeführt wird, indem Holz im Freien gelagert wird.

3. Verfahren nach Anspruch 1, **dadurch gekennzeichnet, dass** die zu Bläue führenden Behandlung durchgeführt wird, indem Holz in einer Trockenkammer behandelt wird, so dass das Holz vor Beginn des Trocknens von Bläue befallen wird.

4. Verfahren nach einem der Ansprüche 1-3, **dadurch gekennzeichnet, dass** für das Imprägnieren unter Druck pigmentiertes Wasserglas verwendet wird, um die Farbe des Holzes oder des Holzprodukts zu verändern.

5. Verfahren nach einem der Ansprüche 1-4, **dadurch gekennzeichnet, dass** das Holz oder das Holzprodukt mittels Heißwachs, Öl, Druckluft, Dampf und/oder Vakuum durchgehend gebräunt wird.

6. Unter Druck imprägniertes Holz oder Holzprodukt, welches mit einem Wasserglas enthaltenden Holzschutzmittel unter Druck imprägniert ist, **dadurch gekennzeichnet, dass** das Holz oder das Holzprodukt vor dem Beginn des Stadiums der Imprägnierung einer zu Bläue führenden Behandlung unterzogen wird, so dass das Holz oder Holzprodukt wenigstens teilweise von Bläue befallen ist, und dass nach oder vor der Imprägnierung das Holz oder das Holzprodukt hochtemperaturgetrocknet und/oder wärmebehandelt wird, so dass die Bläue, die bei der zu Bläue führenden Behandlung gebildet wird, sogar nach maschineller Bearbeitung des Holzes kaum sichtbar ist.

7. Holz oder Holzprodukt nach Anspruch 6, **dadurch gekennzeichnet, dass** für das Imprägnieren unter Druck pigmentiertes Wasserglas verwendet wird.

## Revendications

1. Procédé d'imprégnation sous pression de bois ou de produits du bois avec un produit de conservation du bois contenant du silicate de sodium, dans lequel procédé le bois est imprégné sous pression avec le produit de conservation contenant du silicate de sodium, **caractérisé en ce que** le bois ou le produit du bois est traité par bleuissement avant de débuter l'étape d'imprégnation de sorte que le bois ou le produit du bois étant imprégné est bleui au moins partiellement et que, après ou avant l'imprégnation, le bois ou le produit du bois est séché à haute température et/ou traité thermiquement de sorte que le bleuissement formé dans le traitement par bleuissement ne sera pas principalement visible même après usinage du bois.

2. Procédé selon la revendication 1, **caractérisé en ce que** le traitement par bleuissement est réalisé en stockant le bois à l'extérieur.

3. Procédé selon la revendication 1, **caractérisé en ce que** le traitement par bleuissement est réalisé en traitant le bois dans une chambre de séchage de sorte que le bois est bleui avant de commencer à sécher.

4. Procédé selon l'une quelconque des revendications 1 à 3, **caractérisé en ce qu'**il est utilisé du silicate de sodium pigmenté pour l'imprégnation sous pression pour changer la couleur du bois ou du produit du bois.

5. Procédé selon l'une quelconque des revendications 1 à 4, **caractérisé en ce que** le bois ou le produit du bois est traité totalement marron au moyen de cire chaude, d'huile, d'air sous pression, de vapeur, et/ou sous vide.

6. Bois ou produit du bois imprégné sous pression qui est imprégné sous pression avec un produit de conservation contenant du silicate de sodium, **caractérisé en ce que** le bois ou le produit du bois est traité par bleuissement avant de débuter l'étape d'imprégnation de sorte que le bois ou le produit du bois est traité par bleuissement au moins partiellement et, après ou avant l'imprégnation, le bois ou le produit du bois est séché à haute température et/ou traité thermiquement de sorte que le bleuissement formé dans le traitement par bleuissement ne soit pas principalement observable même après usinage du bois.

7. Bois ou produit du bois selon la revendication 6, **caractérisé en ce qu'**il est utilisé du silicate de sodium pour l'imprégnation sous pression.
